# EUROPÄISCHE PATENTANMELDUNG

(11) **EP 3 621 035 A1**
(43) Veröffentlichungstag der Anmeldung: **11.03.2020**
(21) Anmeldenummer: 19194843.9
(22) Anmeldetag: 02.09.2019
(51) Int. Cl.: G06T 7/73, G06T 7/246, B60W 30/165, G05D 1/02, G08G 1/00

(54) **VERFAHREN ZUM FÜHREN EINES FAHRZEUGS HINTER EINEM VORAUSFAHRENDEN FAHRZEUG**

(30) Priorität: 08.09.2018 DE 102018007110
(71) Anmelder: Diehl Defence GmbH & Co. KG, 88662 ÜBERLINGEN (DE)
(72) Erfinder: Köberle, Jürgen, 88662 Überlingen (DE); Steurer, Björn, 88690 Uhldingen (DE); Kushauer, Jörg, 88693 Deggenhausertal (DE); Gagel, Florian, 88690 Uhldingen-Mühlhofen (DE); Kleinhans, Robert, 88662 Überlingen (DE)
(74) Vertreter: Diehl Patentabteilung

(57) **Zusammenfassung**

Die Erfindung betrifft ein Verfahren zum Führen eines Fahrzeugs (4) hinter einem vorausfahrenden Fahrzeug (2).

Um ein spurtreues Folgen des hinteren Fahrzeugs (4) hinter dem vorderen Fahrzeug (2) zuverlässig auch bei fehlender Fahrbahnmarkierung oder anderer Straßenmerkmale zu ermöglichen, wird vorgeschlagen, dass das vorausfahrende Fahrzeug (2) während seines Fahrens ein Führbild (20) aufnimmt, aus diesem Bildteile beschreibende Deskriptoren ermittelt werden, das hintere Fahrzeug (4) in einer vorgegebenen Nähe (N) des Aufnahmeorts (26) des Führbilds (20) ein Folgebild (22) aufnimmt, aus dem Folgebild (22) ermittelte Deskriptoren mit denen aus dem Führbild (20) verglichen werden und das hintere Fahrzeug (4) aus dem Vergleich seine eigene Position relativ zur Position des vorausfahrenden Fahrzeugs (2) erkennt und seine Fahrt so lenkt, dass es in einer vorbestimmter Weise relativ zum vorausfahrenden Fahrzeug (2) fährt.

## Beschreibung

Die Erfindung betrifft ein Verfahren zum Führen eines Fahrzeugs hinter einem vorausfahrenden Fahrzeug.

Autonom fahrende Fahrzeuge werden immer weiter miteinander vernetzt. Beim sogenannten Platooning werden Lastkraftwagen auf der Autobahn so miteinander vernetzt, sodass sie dicht auffahren können und einen kompakten, vernetzten Konvoi bilden. Die Lenk-, Brems- und Beschleunigungskommandos werden vom ersten Lastkraftwagen, dem Führungsfahrzeug, per WLAN an die nachfolgenden Lastkraftwagen gegeben, sodass sich die gesamte Kolonne simultan über die Autobahn bewegt. Über Abstandssensoren wird der Abstand zwischen den Lastkraftwagen gehalten und Spurhaltesensorik orientiert sich an der Straßenmarkierung zum Halten des Fahrzeugs in der Spur.

Eine Übertragung dieser Technik auf Fahrsituationen in der Stadt, auf schlecht markierten Straßen oder sogar auf Feld- oder Waldwegen ist nicht ohne Weiteres möglich. Es müssen zeitlich deutlich größere Abstände eingehalten werden und das Halten der Fahrspur des vorausfahrenden Fahrzeugs ist bei schlechter oder fehlender Fahrbahnmarkierung deutlich erschwert.

Es ist eine Aufgabe der vorliegenden Erfindung, ein Verfahren zum Führen eines Fahrzeugs hinter einem vorausfahrenden Fahrzeug anzugeben, das auch im Stadtverkehr und auf schlecht markierten Wegen durchführbar ist.

Diese Aufgabe wird durch ein Verfahren der eingangs genannten Art gelöst, bei dem das vorausfahrende Fahrzeug erfindungsgemäß während seines Fahrens ein Führbild aufnimmt, aus diesem Bildteile beschreibende Deskriptoren ermittelt werden, das hintere Fahrzeug in einer vorgegebenen Nähe des Aufnahmeorts des Führbilds ein Folgebild aufnimmt, aus dem Folgebild ermittelte Deskriptoren mit denen aus dem Führbild verglichen werden und das hintere Fahrzeug aus dem Vergleich seine eigene Position relativ zur Position des vorausfahrenden Fahrzeugs erkennt und seine Fahrt so lenkt, dass es in einer vorbestimmten Weise relativ zum vorausfahrenden Fahrzeug fährt.

Die Erfindung geht von der Überlegung aus, dass sich ein Halten der Spur beim Kolonnenfahren ohne Fahrbahnmarkierungen an anderen optischen Auffälligkeiten der Umgebung orientieren kann, selbst wenn diese Auffälligkeiten nicht zur Straße gehören oder in keinem bekannten örtlichen Bezug zur Straße stehen. Werden diese Auffälligkeiten im Führbild als solche erkannt und ihre Lage im Führbild abgespeichert, so kann das hintere Fahrzeug später die gleiche Lage wie das vorausfahrende Fahrzeug einnehmen, wenn es sich so positioniert, dass die gleichen Auffälligkeiten im Folgebild in gleicher Weise zueinander angeordnet sind.

Erschwerend kann es vorkommen, dass das vorausfahrende Fahrzeug im Stadtverkehr oder in unwegsamem Gelände optisch verloren geht, also vom hinterherfahrenden Fahrzeug nicht mehr gesehen werden kann. Auch in einem solchen Falle ist es wichtig, dass das hinten fahrende Fahrzeug die Spur des vorausfahrenden Fahrzeugs möglichst genau hält, um nicht in einen Graben oder gegen eine Hauswand zu fahren. Auch dieses Problem kann durch einen Bildervergleich gelöst werden. Durch den Vergleich der beiden Bilder kann das hintere Fahrzeug seine Position erkennen, beispielsweise durch eine Perspektivverschiebung von markanten Punkten in den beiden Bildern. Es kann eine Ablage beziehungsweise eine Positionsabweichung der beiden Aufnahmepositionen ermittelt werden und dadurch eine Abweichung des Orts des hinteren Fahrzeugs zum früheren Ort des vorderen Fahrzeugs, als dieses am Aufnahmeort des Führbilds war. Eine solche Abweichung oder Ablage kann korrigiert werden, und das hintere Fahrzeug kann in die Spur des vorderen Fahrzeugs einschwenken oder in einer anderen gewünschten Weise relativ zur Spur des vorderen Fahrzeugs gebracht oder gehalten werden.

Um einen Bildvergleich durchführen zu können, müssen das Führbild und das Folgebild zusammengeführt werden, z.B. wird das Führbild zum hinteren Fahrzeug geschickt. Bei einer hohen Bildrate pro Zeit ist hierfür eine Drahtlosübertragung mit hoher Bandbreite notwendig. Diese Voraussetzung kann durch den Deskriptorenvergleich umgangen werden. Durch den Deskriptorenvergleich ist ein Vergleich der beiden Bilder als solche nicht notwendig, sodass die Führbilder nicht zum hinteren Fahrzeug übertragen werden müssen, sondern es reicht aus, die Deskriptoren zum hinteren Fahrzeug zu übertragen. Übertragungsbandbreite kann eingespart werden und eine Übermittlung der Daten wird auch bei schlechter Datenverbindung beziehungsweise weiter Übertragungsstrecke vereinfacht.

Deskriptoren beschreiben zweckmäßigerweise Schlüsselpunkte in einem Bild. Schlüsselpunkte können Bildpunkte sein, die einen vorgegebenen Grad an Auffälligkeit gegenüber anderen Bildpunkten überschreiten. Schlüsselpunkte können durch Grauwertgradienten zu den umgebenden Bildpunkten und/oder der Grauwertgradienten der umgebenden Bildpunkte zueinander bestimmt werden. Auch Gradientenrichtungen um den Schlüsselpunkt können verwendet werden. Hierzu können Größe und Orientierungen der umliegenden Bildgradienten bestimmt werden. Deskriptoren beinhalten zweckmäßigerweise auch die Lage des zugeordneten Schlüsselpunkts im Bild und/oder Lage von Schlüsselpunkten zueinander im Bild.

Führbild und Folgebild werden zweckmäßigerweise jeweils nach vorne, also in Fahrtrichtung, aufgenommen, die Fahrtrichtung liegt also innerhalb des Bilds. Die Bilder erfassen zweckmäßigerweise die Straße beziehungsweise den Weg und umgebende Landschaft, sodass markante Landschaftspunkte das Auffinden des richtigen Wegs ermöglichen, auch wenn das Führungsfahrzeug beziehungsweise das vorausfahrende Fahrzeug für das hintere Fahrzeug nicht mehr sichtbar ist. Beide Fahrzeuge nehmen zweckmäßigerweise regelmäßig Bilder auf, beispielsweise mehrere Bilder pro Sekunde. Auf diese Weise kann das Erkennen der eigenen Position des hinteren Fahrzeugs relativ zur Position des vorderen Fahrzeugs zum Aufnahmezeitpunkt des jeweiligen Führbilds regelmäßig ermittelt und die Position beziehungsweise Lenkung des hinteren Fahrzeugs kann regelmäßig korrigiert werden.

Das vordere Fahrzeug kann manuell gesteuert oder autonom geführt werden. Es nimmt das oder die Führbilder auf. Führ- und Folgebilder sind zweckmäßigerweise im visuellen Spektralbereich aufgenommen. Das vordere Fahrzeug umfasst eine zweckmäßigerweise nach vorne gerichtete Kamera und eine Auswerteeinheit zur Erzeugung der Deskriptoren aus dem Führbild beziehungsweise den Führbildern. Das Führbild kann während der Fahrt oder während des Stillstands des vorausfahrenden Fahrzeugs aufgenommen werden.

Das hintere Fahrzeug umfasst zweckmäßigerweise die gleiche Kamera oder eine gleiche Bilder aufnehmende Kamera. Auch die Auswerteeinheit ist zweckmäßigerweise gleich oder gleichwirkend, wobei es vorteilhaft ist, wenn die Deskriptoren in beiden Fahrzeugen mit den gleichen Algorithmen ermittelt werden. Auch die Ausrichtung der Kamera ist in beiden Fahrzeugen zweckmäßigerweise gleich und insbesondere starr. Das Folgebild wird vom hinteren Fahrzeug aufgenommen, das anhand der Bildauswertung zweckmäßigerweise autonom gelenkt wird. Hierbei kann das spurtreue Führen anhand der Deskriptorenauswertung einen Teil der autonomen Führung des hinteren Fahrzeugs bilden.

Das Folgebild wird in einer vorgegebenen Nähe des Aufnahmeorts des Führbilds aufgenommen. Hierfür ermittelt das hintere Fahrzeug diesen Aufnahmeort mit einer für den Deskriptorenvergleich ausreichenden Genauigkeit aus entweder zusätzlichen Informationen oder aus dem Deskriptorenvergleich an sich. Wird die Nähe des hinten fahrenden Fahrzeugs mit einem Deskriptorenvergleich bestimmt, so kann die Abstandsvorgabe durch eine ausreichende Deskriptorenkorrelation definiert sein. Korrelieren Deskriptoren zweier Bilder ausreichend, sind sie also mehr als vorgegeben ähnlich, so kann die vorgegebene Nähe als gegeben angenommen werden, da die beiden Bilder nicht weit voneinander entfernt aufgenommen worden sein können. Wird die vorgegebene Nähe aus anderen Informationsquellen bestimmt, beispielsweise GPS-Daten, kann sie in einem expliziten Abstandswert bestimmt sein.

Die beiden Fahrzeuge sind zweckmäßigerweise Landfahrzeuge, beispielsweise Reifenfahrzeuge. In gleicher Weise können auch drei oder mehr Fahrzeuge beteiligt sein, wobei die Daten aus dem Führbild an mehrere oder alle beteiligten hinteren Fahrzeuge gesendet werden. Das vorausfahrenden Fahrzeug kann, muss aber nicht das erste Fahrzeug der Kolonne sein.

Zum Kolonnefahren kann das Folgebild aufgenommen werden, während das vorausfahrende Fahrzeug die Strecke abfährt, sodass ein vollständiges Abfahren der Kolonnenstrecke durch ein Führungsfahrzeug, bevor die Kolonnenfahrt beginnen kann, entfällt.

Die Fahrt des hinteren Fahrzeugs wird so gelenkt, dass es in einer vorbestimmten Weise relativ zum vorderen Fahrzeug fährt. Diese Weise bezieht sich zweckmäßigerweise auf die Spur des vorderen Fahrzeugs, wodurch ein spurtreues Fahren des hinteren Fahrzeugs oder mehrerer hinterer Fahrzeuge relativ zum ersten Fahrzeug beziehungsweise vorausfahrenden Fahrzeug erreicht wird. Je nach Fahrweise kann auch ein Spurversatz des hinteren Fahrzeugs zur Spur des vorderen Fahrzeugs gewählt werden, beispielsweise um einen schlechten Weg durch mehrere LKWs nicht vorzeitig zu zerstören. Der Spurversatz beziehungsweise eine Ablage des hinteren Fahrzeugs relativ zur Spur des vorderen Fahrzeugs kann als Abstand des hinteren Fahrzeugs zur Spur des vorderen Fahrzeugs in senkrechter Richtung zur Spur und auf der Erdoberfläche liegend verstanden werden. Der zu erreichende Spurversatz kann Null oder ein anderer Abstand sein.

Die aus dem Führbild gewonnenen Daten, wie beispielsweise die die Bildteile beschreibenden Deskriptoren, werden zweckmäßigerweise drahtlos vom vorderen an das oder die hinteren Fahrzeuge übermittelt, beispielsweise per Funk, insbesondere WLAN. Eine Sichtbarkeit des vorausfahrenden Fahrzeugs durch das nachfolgende Fahrzeug ist nicht notwendig. Ein Abstand zwischen den Fahrzeugen kann anhand des Deskriptorenvergleichs oder eines anderen Sensors, wie beispielsweise eines Abstandsensors, eingestellt beziehungsweise gesteuert werden.

In einer vorteilhaften Ausgestaltung der Erfindung werden im Führbild und im Folgebild jeweils mehrere Schlüsselpunkte ermittelt. Die Umgebung eines jeden Schlüsselpunkts kann ein Bildteil sein, aus dem der Deskriptor ermittelt wird. Dieser kann somit den Schlüsselpunkt anhand der umgebenden Bilddaten beziehungsweise den Bildteil an sich beschreiben. Werden zum Führbild und Folgebild jeweils die Deskriptoren ermittelt, so können diese miteinander verglichen werden und auf Übereinstimmung beziehungsweise Ähnlichkeit zueinander geprüft werden. Bei einer mehr als vorgegebenen Übereinstimmung der Deskriptoren können die beiden Bilder einander zugeordnet werden, die Bildkorrelation ist erfolgreich. Hierbei ist nicht die Übereinstimmung einzelner Deskriptoren ausschlaggebend, sondern die Übereinstimmung der Gesamtheit der Deskriptoren im Folgebild mit denen des Führbilds. Nur dann, wenn die beiden Bilder einander zugeordnet werden, werden sie beziehungsweise ihre Deskriptoren beziehungsweise deren Schlüsselpunkte zu einer Bestimmung der Fahrzeugposition herangezogen.

Als Verfahren zur Bestimmung der Deskriptoren aus Bildteilen ist das SIFT-Verfahren (Scale Invariant Feature Transform) vorteilhaft. Ein ähnliches Verfahren ist das SURF-Verfahren (Speeded Up Robust Features) oder das ORB-Verfahren (Oriented fast and Rotated Brief). Auch im SLAM-Verfahren (Simultanious Location And Mapping) werden Bildinhalte untersucht zur Lokalisierung einer Kamera in einer Umgebung. Andere bekannte Verfahren für eine Merkmalsfindung und einen automatischen Merkmalsvergleich sind beispielsweise Laplacian of Gaussian (LoG) sowie Normalized Cross-Correlation Function (NCCF). Es können aber auch andere Verfahren verwendet werden, die für einen automatischen Vergleich von Schlüsselpunkten beziehungsweise Deskriptoren geeignet erscheinen.

Vor der Ermittlung der Schlüsselpunkte kann das jeweilige Bild, also das Führbild oder Folgebild, aus dem die Schlüsselpunkte gewonnen werden sollen, mit einem Gauss-Filter geglättet werden, um es von Bildrauschen zu bereinigen. Nach dem Ermitteln der Schlüsselpunkte können diese in einem weiteren Verfahrensschritt auf ihre Robustheit untersucht werden, wobei letztendlich zweckmäßigerweise nur solche Schlüsselpunkte ausgewählt werden, die vorgegebenen Stabilitätsansprüchen genügen. Robust sind beispielsweise solche Schlüsselpunkte, die unempfindlich gegen perspektivische Verzerrung und/oder Rotation sind. Dafür geeignet sind beispielsweise Schlüsselpunkte, deren Bildeigenschaften von ihrem Hintergrund abweichen. Eine Rotationsstabilität kann erreicht werden, wenn einem Schlüsselpunkt eine oder mehrere Orientierungen zugewiesen werden, basierend auf den Orientierungen der umliegenden Bildgradienten. Zukünftige Berechnungen beziehungsweise Vergleiche können auf der Grundlage von Bilddaten durchgeführt werden, die relativ zu den zugewiesenen Orientierungen und insbesondere auch Skalierungen und Positionierungen transformiert wurden, um Invarianz für eben diese Transformationen zu gewährleisten.

Aus den so gefundenen Schlüsselpunkten können die Deskriptoren ermittelt werden. Hierzu können die den Schlüsselpunkt umgebenden Bildgradienten ermittelt werden, die in einem mehrdimensionalen Merkmalsvektor, dem Deskriptor, zusammengefasst werden können. Auch dieser Merkmalsvektor ist zweckmäßigerweise robust gegen Änderungen in der Beleuchtung, der Verzerrung, der Rotation und dergleichen. Ein Deskriptor enthält neben seinen Bildmerkmalen am Schlüsselpunkt zweckmäßigerweise auch die Koordinaten seines Schlüsselpunkts, sodass der Schlüsselpunkt im Deskriptor enthalten ist.

Ein Vergleich der Deskriptoren erfolgt mit einem geeigneten Algorithmus, beispielsweise dem Random-Sample-Consensus-Algorithmus (RANSAC) oder dem FLANN-Matcher. Allgemein gesprochen kann zum Vergleich von Deskriptoren die Distanzfunktion verwendet werden, die die Vektordistanz, also den Richtungsunterschied zweier Vektoren, bestimmt.

Durch einen solchen Deskriptorenvergleich können mehrere Schlüsselpunkte im Folgebild jeweils einem Schlüsselpunkt im Führbild oder andersherum zugeordnet werden. Durch die Lage der Schlüsselpunkte im Folgebild und im Führbild kann die Position des hinteren Fahrzeugs relativ zur Position des vorderen Fahrzeugs zum Aufnahmezeitpunkt des Führbilds erkannt werden. Allgemein gesprochen kann das hintere Fahrzeug seine eigene Position aus der Lage von Schlüsselpunkten zueinander im Folgebild im Vergleich zur Lage der zugeordneten Schlüsselpunkte im Führbild erkennen. Aus einem Versatz der einander zugeordneten Punkte in den beiden Bildern zueinander kann die Ortsabweichung des hinteren zum vorderen Fahrzeug ermittelt werden, selbstverständlich zum jeweiligen Aufnahmezeitpunkt der beiden Bilder.

Um die beiden Bilder miteinander vergleichen zu können, ist es sinnvoll, dass das nachfolgende Fahrzeug den Ort der Aufnahme des Führbilds oder dessen Nähe zumindest indirekt findet. Hierfür sind mehrere Verfahren möglich. In einem ersten Verfahren wird ein Bild mit einer Bilderreihe korreliert. Unter einer Bildkorrelation wird im Folgenden der Vergleich der Deskriptoren eines Führbilds mit denen eines Folgebilds verstanden, wobei die Korrelation erfolgreich ist, wenn die Deskriptoren in ihrer Gesamtheit mehr als vorgegeben übereinstimmen. So kann das hintere Fahrzeug ein Folgebild mit einer Reihe Führbildern korrelieren. Hierbei wird die Korrelation erfolgreich sein, wenn zumindest eines der Bilder aus der Bilderreihe so aufgenommen ist, dass die Aufnahmeorte der beiden Bilder in der vorbestimmten Nähe zueinander liegen, also weniger als eine Mindestnähe beziehungsweise ein Maximalabstand.

Ebenso gut ist es vice versa möglich, eines der Führbilder mit einer Reihe Folgebildern zu korrelieren. Allgemein gesprochen ist es möglich, dass das hintere Fahrzeug zueinander korrelierende Führ- und Folgebilder auffindet durch Bildkorrelation eines Folge- oder Führbilds mit einer Reihe von zweckmäßigerweise nacheinander aufgenommenen Führ- beziehungsweise Folgebildern. Je nach Fahrgeschwindigkeit eines oder beider Fahrzeuge korrelieren bei einer Nähe der beiden Aufnahmeorte aus einer Reihe von Führ- beziehungsweise Folgebildern nicht nur ein Bild sondern zwei, drei oder mehrere hintereinander aufgenommene Bilder.

Eine weitere Möglichkeit zur Auffindung des Aufnahmeorts des Führbilds besteht darin, dass dem Führbild Geokoordinaten zugeordnet werden, die dem hinteren Fahrzeug übermittelt werden. GNSS-Daten reichen in der Regel zwar nicht in ihrer Genauigkeit aus, um ein spurgetreues Folgen zu ermöglichen. Doch ihre Angabe reicht üblicherweise aus, um die Nähe des Aufnahmeorts des Führbilds so ausreichend genau anzugeben, dass eine Bildkorrelation von Führbild und Folgebild erfolgreich ist und hierdurch die Nähe bestätigt ist. Und selbst wenn die Genauigkeit hierfür nicht ausreicht, so kann mit GNSS-Daten die Bilderanzahl einer Folge von Führ- oder Folgebildern derart eingeschränkt werden, dass durch Bildkorrelation mit der gesamten Folge hieraus ein oder mehrere korrelierende Bilder gefunden und somit die Nähe der Aufnahmeorte bestätigt werden kann.

Insbesondere wenn Geokoordinaten nicht zur Verfügung stehen, ist es vorteilhaft, wenn aus mehreren Führbildern ein Führpfad bestimmt wird, entlang dessen das vordere Fahrzeug gefahren ist. Der Führpfad beziehungsweise dessen Koordinaten oder andere beschreibende Angaben können an das nachfolgende beziehungsweise hintere Fahrzeug übermittelt werden. Selbstverständlich kann ein Führpfad auch anhand von Geokoordinaten, z.B. GNSS-Daten ermittelt und nach hinten übermittelt werden. Unter einer Übermittlung eines Führpfads soll im Folgenden auch das Übermitteln von Aufnahmenorten von Führbildern auf dem Führpfad verstanden werden, sodass eine explizite Pfadangabe nicht notwendig ist.

Zweckmäßigerweise wird aus der Bewegung von Schlüsselpunkten durch eine Reihe von mehreren Führbildern die Bewegung des vorderen Fahrzeugs bestimmt. Hierfür können die Führbilder der Bilderreihe miteinander korreliert werden und die Schlüsselpunkte so einander zugeordnet werden. Bewegen sich die Schlüsselpunkte beispielsweise gleichmäßig um die optische Achse der Kamera, so kann auf eine Geradeausfahrt geschlossen werden. Bewegen sich die Schlüsselpunkte rechts der optischen Achse schneller von dieser weg als links, so kann in einer ersten Näherung und allgemein gesprochen von einer Linkskurve in der Fahrt des vorderen Fahrzeugs ausgegangen werden. Auf diese Weise kann von Führbild zu Führbild eine Fahrtrichtung berechnet werden und daraus der Führpfad.

Weiter ist es vorteilhaft, wenn eine Skalierung des Führpfads anhand der Bewegung mehrerer Schlüsselbilder durch die Führbilder ermittelt wird. Zweckmäßigerweise ist hierzu ein Grundabstand bekannt, zum Beispiel ein Abstand der Kamera zum Boden unter dem Fahrzeug. Auch eine Bekanntheit der Ausrichtung der Kamera ist vorteilhaft. So kann zum Beispiel bei einer ebenen Straße die Bewegungsstrecke eines Schlüsselpunkts auf der Straße ermittelt werden und hieraus die Fahrstrecke von einem Aufnahmeort zum nächsten Aufnahmeort. Mit der gefahrenen Strecke kann die Skalierung des Führpfads durchgeführt werden. Aus dem zeitlichen Abstand der Aufnahmezeitpunkte kann eine Geschwindigkeit des vorderen Fahrzeugs berechnet werden. Hierbei ist es sinnvoll, die Geschwindigkeit beziehungsweise die Fahrstrecke auch durch eine Tachometerangabe und/oder Ratendrehzahl zu ermitteln und die Werte aus der Bilderkennung und der Tachometerangabe und/oder der Ratendrehzahl gegeneinander zu überprüfen. Hierdurch kann einer fehlerhaften Skalierung des Führpfads entgegengewirkt werden.

Weiter ist es vorteilhaft, wenn die Führbilder jeweils ihrem Aufnahmeort auf dem Führpfad zugeordnet werden. Hierunter kann verstanden werden, dass die aus einem Führbild extrahierten Daten, beispielsweise die Deskriptoren, dem Aufnahmeort auf dem Führpfad zugeordnet werden. Diese Daten können an das hintere Fahrzeug übermittelt werden, sodass dieses bei einer erfolgreichen Korrelation des Folgebilds mit dem Führbild seine eigene Position aus den übermittelten Ortsdaten des Aufnahmeorts und der aus der Korrelation bestimmten Abweichung vom Aufnahmeort ermitteln kann.

Allgemein gesprochen kann das hintere Fahrzeug anhand der Bildkorrelation seine eigene Position auf oder relativ zum Führpfad bestimmen. Da das vordere Fahrzeug dem hinteren vorausfährt, ist dem hinteren Fahrzeug der Führpfad vor ihm bekannt, insbesondere bis zum vorderen Fahrzeug. Kurven können vorausgesehen werden, sodass eine Lenkkorrektur beziehungsweise Fahrkorrektur des hinteren Fahrzeugs an den Führpfad angepasst werden kann. Ist die Ablage des hinteren Fahrzeugs von der Spur des vorderen Fahrzeugs beispielsweise links von der Fahrspur in oder kurz vor einer Linkskurve des Führpfads, so kann die Lenkkorrektur nach rechts geringer ausfallen, weil sich der Führpfad der zu weit links befindlichen Fahrspur des hinteren Fahrzeugs auch ohne Lenkkorrektur bereits annähert. Es ist insofern vorteilhaft, wenn eine dem hinteren Fahrzeug voraus liegende Kurve, die das vordere Fahrzeug gefahren ist, in eine Lenkkorrektur zur Erreichung der vorbestimmten Bahn einbezogen wird.

Ist dem hinteren Fahrzeug der Führpfad bekannt, so kann es anhand des Führpfads das Ergebnis der Bildkorrelation überprüfen. Aus dem bekannten Führpfad ist dem hinteren Fahrzeug bereits bekannt, wo der Aufnahmeort des nächsten Führbilds voraussichtlich sein wird. Ergibt die Bildkorrelation einen hiervon grob abweichenden Ortsunterschied, also einen Ortsunterschied über einen vorgegeben Grenzwert, so ist dies ein Hinweis auf eine Fehlermittlung entweder in der Bildkorrelation oder in Daten des Führpfads. Zweckmäßigerweise wird die Ortsangabe des Führpfads höher bewertet als ein Ortsergebnis aus einer Bildkorrelation. Wenn insofern eine Überprüfung der Bildkorrelation negativ ist, kann die Korrelation als wenig glaubwürdig beziehungsweise schlecht bewertet werden. Sie kann dann weniger oder gar nicht zur Lenkkorrektur verwendet werden.

Allgemein gesprochen ist es vorteilhaft, wenn das hintere Fahrzeug seine Lenkung anhand des Führpfads und einer aus der Bildkorrelation abgeleiteten Positionsablage durchführt. Hierbei kann der Führpfad als glaubwürdiger angesehen und als Grundgröße behandelt werden. Die Grundgröße kann durch das Korrelationsergebnis korrigiert werden. Wenn beispielsweise die Korrelation abreißt, vielleicht durch ein Sichthindernis, wie ein quer vor dem hinteren Fahrzeug fahrender Lastkraftwagen auf einer Kreuzung, bleibt der Führpfad als Lenkkorrektiv erhalten. Die autonome Steuerung des hinteren Fahrzeugs kann fortgeführt werden auch ohne Korrelation, bis diese an einem späteren beziehungsweise weiter vorne liegenden Punkt des Führpfads wieder aufgenommen werden kann.

Wenn eine Korrelation mehrfach misslingt, sollte später ein Führbild gefunden werden, in das wieder einkorreliert werden kann. Um dieses möglichst schnell auffinden zu können, ist es vorteilhaft, wenn die vom hinteren Fahrzeug gefahrene Strecke mit dem Führpfad mitgekoppelt wird. Das hintere Fahrzeug kann seine gefahrene Strecke mit einer Strecke des Führpfads vergleichen und zur Auffindung korrelierender Bilder solche Führbilder auswählen, die dem Führpfad der gefahrenen Strecke zugeordnet sind. Hierdurch kann eine Bildkorrelation nach einem Korrelationsabriss, beispielsweise durch ein Sichthindernis, zügig durchgeführt werden.

Weiter ist es vorteilhaft, wenn die Lenkung des hinteren Fahrzeugs geregelt wird. Hierbei kann eine Ablage zwischen dem hinteren Fahrzeug und einem Führpfad, auf dem das vordere Fahrzeug gefahren ist, als Regelgröße verwendet werden. Ebenfalls ist es möglich, dass eine aus einer Bildkorrelation ermittelten Ablage, also eine seitliche Abweichung der beiden Aufnahmeorte vom Führbild und vom Folgebild quer zur Fahrtrichtung des vorderen und/oder hinteren Fahrzeugs, als Regelgröße verwendet wird.

Die Ablage kann auch ein Winkel zwischen der Ausrichtung des hinteren Fahrzeugs und einer Richtung zu einem Punkt auf einem Führpfad sein, auf dem das vordere Fahrzeug gefahren ist. Dieser Punkt liegt beispielsweise in einem vorbestimmten Abstand vor dem hinteren Fahrzeug, wobei dieser vorbestimmte Abstand abhängig von der Fahrgeschwindigkeit des hinteren Fahrzeugs sein kann. Der Sollwert der Regelgröße ist zweckmäßigerweise Null.

Die Erfindung ist außerdem gerichtet auf ein System aus zumindest zwei Fahrzeugen mit jeweils einer Kamera und einer Bildverarbeitungseinheit. Um ein spurtreues Folgen eines hinteren Fahrzeugs hinter einem vorderen Fahrzeug in einfacher Weise zu ermöglichen, wird vorgeschlagen, dass die Bildverarbeitungseinheit erfindungsgemäß zur Bestimmung von Deskriptoren in den Bildern der Kamera vorbereitet ist und zumindest die Bildverarbeitungseinheit zumindest eines der Fahrzeuge dazu vorbereitet ist, Deskriptoren aus dem Bild der Kamera des eigenen Fahrzeugs mit Deskriptoren eines Bilds der Kamera des anderen Fahrzeugs zu vergleichen und daraus die eigene Position relativ zur Position des anderen und vorausfahrenden Fahrzeugs zu erkennen. Weiter ist es vorteilhaft, wenn die Bildverarbeitungseinheit oder eine ihr zugehörige Steuereinheit dazu vorbereitet ist, aus den so ermittelten Daten Lenkbefehle zu bestimmen und hiermit die Fahrt des eigenen Fahrzeugs so zu lenken, dass es in einer vorbestimmten Weise relativ zum vorderen Fahrzeug fährt.

Die bisher gegebene Beschreibung vorteilhafter Ausgestaltungen der Erfindung enthält zahlreiche Merkmale, die teilweise in einigen abhängigen Ansprüchen zu mehreren zusammengefasst wiedergegeben sind. Die Merkmale können jedoch zweckmäßigerweise auch einzeln betrachtet und zu sinnvollen weiteren Kombinationen zusammengefasst werden, insbesondere bei Rückbezügen von Ansprüchen, sodass ein einzelnes Merkmal eines abhängigen Anspruchs mit einem einzelnen, mehreren oder allen Merkmalen eines anderen abhängigen Anspruchs kombinierbar ist. Außerdem sind diese Merkmale jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaften der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung sowie die Art und Weise, wie diese erreicht werden, werden klarer und deutlicher verständlich in Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: einen Konvoi von mehreren Fahrzeugen in einer Ortschaft, der von einem vordersten Fahrzeug geführt wird,
- FIG 2: eine Korrelation von zwei Bildern durch Deskriptorenvergleiche einer Vielzahl von Schlüsselpunkten,
- FIG 3: das Ergebnis von Bildkorrelationen eines Folgebilds mit einer Reihe von Führbildern,
- FIG 4: einen vom führenden Fahrzeug gefahrenen Führpfad mit Aufnahmepunkten von Führbildern und
- FIG 5: die Bewegung von Schlüsselpunkten durch eine Reihe von Führbildern zur Berechnung von Fahrtrichtungsänderungen und Geschwindigkeit.

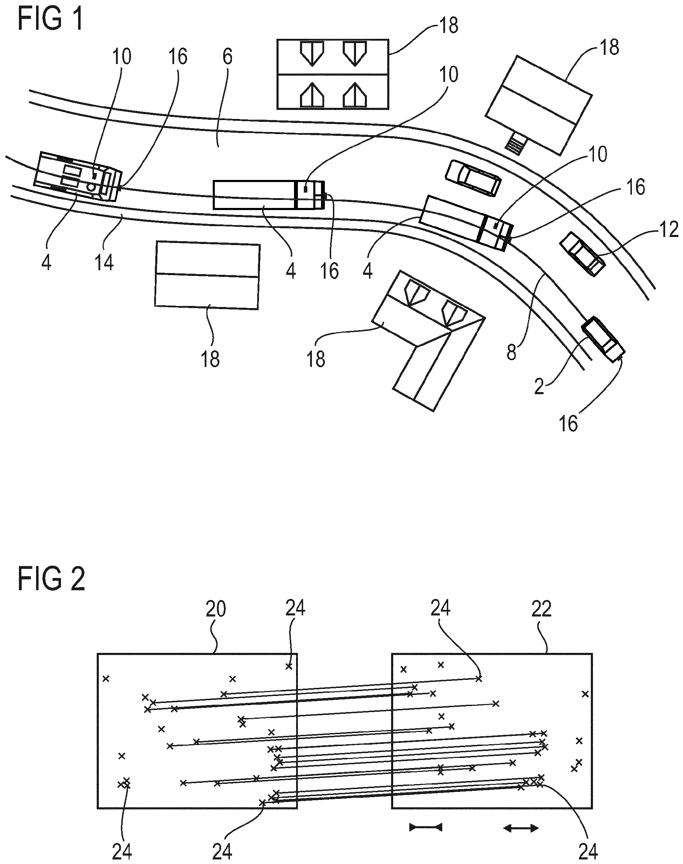

FIG 1 zeigt eine Kolonne aus mehreren Fahrzeugen 2, 4, die aus einem vorausfahrenden Fahrzeug 2 und mehreren dahinter fahrenden Fahrzeugen 4 besteht. Die Kolonne fährt auf einer Straße 6 im städtischen Bereich. Dargestellt ist auch eine Fahrspur beziehungsweise ein Führpfad 8, auf dem das vorausfahrende Fahrzeug 2 gefahren ist. Es ist zu sehen, dass die hinteren Fahrzeuge 4 im Wesentlichen in der Spur des vorderen Fahrzeugs 2 fahren, also dem Führpfad 8 folgen.

Während das vorausfahrende Fahrzeug 2 manuell gesteuert wird, werden die dahinter fahrende Fahrzeuge 4 autonom gesteuert und bleiben autonom gesteuert auf dem Führpfad 8. Eine Abweichung von diesem wird jeweils durch eine Steuereinheit 10 unterbunden, die jedes der Fahrzeuge 2, 4 enthält, und die die Lenkbewegung des betreffenden Fahrzeugs 4 steuert. Durch das Verbleiben auf dem Führpfad 8 wird verhindert, dass die Fahrzeuge 4 in Gegenverkehr 12 geraten oder auf den Bürgersteig 14 fahren.

Jedes der Fahrzeuge 2, 4 ist mit einer Kamera 16 ausgerüstet, die nach vorne gerichtet ist und in FIG 1 nur symbolhaft außen am Fahrzeug 2, 4 dargestellt ist. Die Kamera 16 kann sich auch auf oder innerhalb des Fahrzeugs 2, 4 befinden und beispielsweise durch die Frontscheibe Bilder aufnehmen. Die Kameras 16 sind bei allen Fahrzeugen 2, 4 in die gleiche Richtung relativ zur Fahrzeugrichtung ausgerichtet und auch alle in gleicher Höhe über dem Erdboden angebracht. Alternativ ist den Steuereinheiten 10 jeweils die Höhe ihrer Kamera 16 zum Boden bekannt, wobei die Höhen zwischen den Fahrzeugen 2, 4 ausgetauscht werden.

Die Kameras 16 nehmen in regelmäßigen Zeitabständen, beispielsweise alle 0,5 Sekunden, ein Bild auf, dessen Bilddaten von einer Bildverarbeitungseinheit ausgewertet werden, die Teil der Steuereinheit 10 ist oder mit dieser signaltechnisch verbunden ist. Die aufgenommenen Bilder enthalten neben der Abbildung des Fahrwegs, in diesem Fall die Straße 6, wobei es auch der Erdboden in einem offenen Gelände, ein Wald- oder Feldweg oder dergleichen sein kann, eine Abbildung der umgebenden Landschaft, in diesem Fall beispielsweise Häuser 18, andere Fahrzeuge 12 , Bäume, Straßenschilder, andere Gebäude und/oder Wolken.

Die aufgenommenen Bilder werden von der Bildverarbeitungseinheit auf Schlüsselpunkte untersucht. Das zugehörige Verfahren wird im Folgenden anhand FIG 2 beschrieben.

FIG 2 zeigt beispielhaft ein Führbild 20 und ein Folgebild 22 der gleichen Szenerie. Das Führbild 20 wurde vom vorausfahrenden Fahrzeug 2 aufgenommen und das Folgebild 22 von einem der dahinter fahrenden Fahrzeuge 4. Das Führbild 20 wird von der Bildverarbeitungseinheit des vorausfahrenden Fahrzeugs 2 ausgewertet und das Folgebild 22 von der Bildverarbeitungseinheit desjenigen hinten fahrenden Fahrzeugs 4, dessen Kamera 16 das Folgebild 22 aufgenommen hat. Mittels eines geeigneten Bildverarbeitungsverfahrens, beispielsweise des SIFT- oder SURF-Verfahrens oder eines davon abgeleiteten Verfahrens, werden aus jedem der beiden Bilder 20, 22 Schlüsselpunkte 24 ermittelt. Ob es sich um einen Schlüsselpunkt 24 handelt, ergibt sich aus demjenigen Teil des entsprechenden Bilds 20, 22, der um den Schlüsselpunkt 24 herumliegt, beispielsweise ein Bereich von 3 x 3 Bildpunkten um den betreffenden Schlüsselpunkt 24 herum. Aus beispielsweise einem Verhältnis der Grauwerte dieser Bildpunkte zueinander, beispielsweise Grauwertegradienten benachbarter Bildpunkte, wird der Bildcharakter des betreffenden Schlüsselpunkts 24 bestimmt und in einem diesen Bildteil beschreibenden Deskriptor abgespeichert.

Bei dem in FIG 2 gezeigten Ausführungsbeispiel sind in beiden Bildern 20, 22 eine Vielzahl von Schlüsselpunkten 24 aufgefunden worden, bei denen der Deskriptor insofern eine Signifikanzschwelle überschritten hat, sodass der entsprechende Schlüsselpunkt 24 also eine bildhaft auffällige Bildumgebung hat.

Zur Beschreibung des Führbilds 20 sind die Deskriptoren ausreichend. Es reicht daher aus, wenn das vorne fahrende Fahrzeug 2 die Daten zu den Deskriptoren an das oder die dahinter fahrenden Fahrzeuge 4 schickt. Auf die Übertragung des gesamten Bildinhalts kann verzichtet werden, sodass auch bei einer hohen Bilderzeugungs- und Auswertungsrate die notwendige Bandbreite zur drahtlosen Übertragung der Bilddaten vom vorne fahrenden Fahrzeug zum dahinter fahrenden Fahrzeug 4 überschaubar bleibt. Das oder die dahinter fahrenden Fahrzeuge 4 empfangen die Bilddaten mit den Deskriptoren und speichern diese in einem der Steuereinheit 10 angegliederten Datenspeicher ab.

Auch ein folgendes Fahrzeug 4 nimmt mit seiner Kamera 16 regelmäßig Bilder auf und wertet diese wie oben beschrieben aus. Ist nun ein Folgebild 22 in der Nähe des Aufnahmeorts des Führbilds 20 aufgenommen, so weist es im Wesentlichen den gleichen Bildinhalt auf, wie das Führbild 20. Zum Vergleich und der Korrelation der beiden Bilder 20, 22 ist nun ein Deskriptorenvergleich der Deskriptoren des Folgebilds 22 mit denen des Führbilds 20 ausreichend. Liegen ausreichend übereinstimmende Deskriptoren vor, so werden die zugehörigen Schlüsselpunkte 24 einander zugeordnet. Eine solche Zuordnung ist in FIG 2 durch Schlüsselpunkte 24 verbindende gerade Linien angedeutet.

Es ist zu sehen, dass in dem Folgebild 22 eine Vielzahl von Schlüsselpunkten 24 aufgefunden wurden, deren Deskriptor ausreichend mit einem Deskriptor aus dem Führbild 20 übereinstimmt, sodass die beiden betreffenden Schlüsselpunkte 24 einander zugeordnet werden. Übersteigt die Zuordnung in Zahl und Ähnlichkeit der Deskriptoren ein vorgegebenes Maß, so wird die Korrelation der beiden Bilder 20, 22 als erfolgreich angesehen. Bei dem Beispiel aus FIG 2 sei dies der Fall.

Bei diesen Bilder 20, 22 ist zu sehen, dass die Kameras 16 in ihrer Ausrichtung nicht exakt übereinstimmen, in beiden Bildern 20, 22 sind Schlüsselpunkte 24, denen kein entsprechender Schlüsselpunkt im anderen Bild 20, 22 zugeordnet werden konnte. Da jedoch ausreichende Zuordnungen in Zahl und Qualität vorliegen, ist die Bildkorrelation trotzdem erfolgreich.

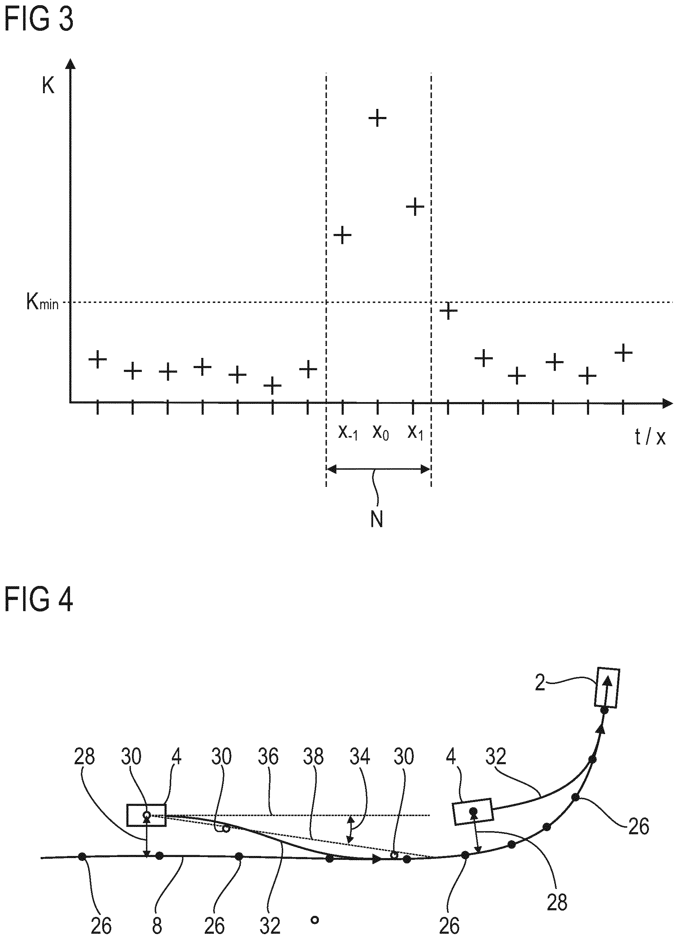

FIG 3 zeigt ein Diagramm, in dem die Korrelationsgüte K über die Zeit t beziehungsweise den Ort x aufgetragen ist. Jedes Fahrzeug 2, 4 bewegt sich fahrend durch den Raum, sodass bei gleichmäßiger Fahrt und gleichmäßig getakteter Bildaufnahme sich auch örtlich eine gleichmäßige Verteilung der Aufnahmeorte ergibt, wie in FIG 3 dargestellt ist.

Da dem hinteren Fahrzeug 4 nicht bekannt ist, wo der Aufnahmeort eines erhaltenen Führbilds 20 liegt, wird dieser vom Folgefahrzeug 4 zunächst bestimmt. Als einfachste Möglichkeit werden vom Führungsfahrzeug 2 zusätzlich zum Bild 20 beziehungsweise dessen Deskriptoren die Ortskoordinaten des Aufnahmeorts ermittelt und an das Folgefahrzeug 4 mit übergeben. Beispielsweise enthalten die Fahrzeuge 2, 4 GPS-Empfänger, wobei die Steuereinheit 10, die die Aufnahmen der Kamera 16 steuert, die Bilddaten mit dem GPS-Aufnahmeort verknüpft. Erreicht das hintere Fahrzeug 4 während seiner Fahrt den Aufnahmeort oder dessen Nähe, so kann es dasjenige Führbild 20 mit dem Folgebild 22 korrelieren, das diesem örtlich am nächsten liegt.

Eine weitere Möglichkeit besteht darin, dass ein Folgebild 22 mit einer Reihe von Führbildern 20 korreliert wird. Ein solches Vorgehen ist in FIG 3 dargestellt. Es ist zu sehen, dass die ersten sieben Korrelationen nicht erfolgreich sind, da ihre Korrelationsgüte K unter einem Güteminimum Kₘᵢₙ liegt. Dann erfolgen jedoch 3 Korrelationen, bei denen die Korrelationsgüte K über dem Minium Kₘᵢₙ liegt. Diese drei Aufnahmen wurden an den Aufnahmeorten x₋₁, x₀, x₁ aufgenommen. Die Korrelationsgüte K ist bei dem Folgebild, das am Aufnahmeort x₀ aufgenommen wurde, am größten. Es wird daher davon ausgegangen, dass der Aufnahmeort x₀ des Folgebilds 22 in der größten Nähe des Aufnahmeorts desjenigen Führbilds 20 liegt, das mit der Reihe der Folgebilder 22 korreliert wurde. Die nachfolgenden Korrelationen sind wiederum negativ. Aus diesem Korrelationsverlauf kann bereits auf den Aufnahmeort des Führbilds 20 geschlossen werden, sodass dasjenige Folgebild 22 zur Positionsbestimmung des hinteren Fahrzeugs 4 verwendet wird, dessen Aufnahmeort x₀ am nächsten zum Aufnahmeort des überprüften Führbilds 20 liegt.

Im Prinzip können auch die beiden umgebenen Korrelationen beziehungsweise Folgebilder 22 zur Positionsbestimmung herangezogen werden, da auch sie in der vorbestimmten Nähe N des Aufnahmeorts des Führbilds 20 liegen. Auf diese Weise kann die Nähe N des Fahrzeugs 4 zum Aufnahmeort des Führbilds 20 mit ausreichender Genauigkeit erkannt werden und die in dieser Nähe N liegenden Folgebilder 22 können zur Ortsbestimmung des hinteren Fahrzeugs 4 verwendet werden.

Um das Fahrzeug 4 in der Spur beziehungsweise dem Führpfad 8 des vorderen Fahrzeugs 2 zu halten, ist es notwendig, dass das Fahrzeug 4 seinen Versatz, auch als Ablage bezeichnet, zum Führpfad 8 erkennt. Diese Ablage kann die seitliche Abweichung vom Führpfad 8 senkrecht zur Richtung des Führpfads sein. Zum Erkennen der eigenen Position relativ zur Position des vorderen Fahrzeugs 2 ermittelt die Bildverarbeitung des hinteren Fahrzeugs 4 die Lage der Schlüsselpunkte 24 im Folgebild 22 relativ zueinander im Vergleich zur relativen Lage der Schlüsselpunkte 24 im Führbild 20.

Bei der Darstellung aus FIG 2 ist zu sehen, dass die Schlüsselpunkte 24 im Folgebild 22 in der Nähe des linken Bildrands in waagerechter Richtung enger zusammenstehen als die zugeordneten Schlüsselpunkte 24 im Führbild. Weiter rechts im Folgebild 22 stehen die Schlüsselpunkte 24 in Horizontalrichtung jedoch weiter beabstandet, als die zugeordneten Schlüsselpunkte 24 im Führbild 20. Diese horizontale Stauchung beziehungsweise Spreizung ist durch die beiden Doppelpfeile unter dem Folgebild 22 angedeutet, die im linken Bildteil eine Stauchung und im rechten Bildteil eine Dehnung symbolisieren. Hieraus kann beispielsweise geschlossen werden, dass sich die Position des hinteren Fahrzeugs 4 weiter rechts befindet als der Aufnahmeort des Führbilds 20.

Zur Lenkkorrektur und zum Einschwenken des hinteren Fahrzeugs 4 in den Führpfad 8 muss daher eine Lenkkorrektur nach links erfolgen. Auf diese Weise kann nicht nur die Ablage beziehungsweise der Querversatz zum Führpfad 8 ermittelt werden, sondern natürlich auch der Versatz des Aufnahmeorts des Folgebilds 22 zum Aufnahmeort des Führbilds 20 in Längsrichtung zum Führpfad 8, wenn die Gesichtsfelder der Kameras 16 die gleiche Bildpunktzahl pro Grad Gesichtsfeld aufweisen.

Selbstverständlich ist diese Darstellung aus FIG 2 sehr stark vereinfacht, da die Lageverschiebung der Schlüsselpunkte 24 in den Bildern 20, 22 zueinander nicht nur von der Lage des betreffenden Fahrzeugs 2, 4 zu den mit den Schlüsselpunkten 24 aufgenommenen Objekten abhängt, sondern auch abhängig ist von der Lage dieser Objekte zueinander im Raum. Anhand der beispielhaften Darstellung in FIG 2 kann insofern nur prinziphaft die Positionserkennung des Fahrzeugs 4 relativ zum Aufnahmeort des Führbilds 20 erläutert werden.

Nachdem die Position des hinteren Fahrzeugs 4 relativ zum Führpfad 8 beziehungsweise zum Aufnahmeort des Führbilds 20 erkannt ist, steuert die Steuereinheit 10 Lenkbewegungen des Fahrzeugs 4 derart, dass es in einer vorbestimmten Weise relativ zum vorderen Fahrzeug 2 fährt, also in einer vorbestimmten Weise relativ zur Spur beziehungsweise dem Führpfad 8 des vorderen Fahrzeugs 2. Beispielsweise fährt das hintere Fahrzeug in der Spur, sodass es dem vorderen Fahrzeug 2 spurtreu folgt. Eine solche Lenkkorrektur ist beispielhaft anhand der Darstellung aus FIG 4 erläutert.

FIG 4 zeigt den Führpfad 8 des vorderen Fahrzeugs 2 zusammen mit einer Vielzahl von Aufnahmeorten 26 von Führbildern 20. Die Aufnahmeorte 26 sind durch schwarze Punkte auf dem Führpfad 8 gekennzeichnet. Es ist zu sehen, dass das vordere Fahrzeug 2 nach einer Geradeausfahrt nach links abbiegt, hierfür sein Tempo verringert und nach Durchfahren der Linkskurve langsam wieder beschleunigt.

Das hintere Fahrzeug 4 ist im linken Teil der Darstellung zu einem ersten Zeitpunkt und weiter rechts in der Darstellung zu einem späteren Zeitpunkt dargestellt. Möglich ist auch, dass es sich um zwei verschiedene Fahrzeuge 4 aus der Kolonne handelt. Wie oben beschrieben hat das hintere Fahrzeug 4 seine Ablage 28 zum Führpfad 8 ermittelt. Das vordere Fahrzeug 2 hat in seiner Datenübermittlung zum hinteren Fahrzeug 4 nicht nur die Bildinformationen verschickt, sondern auch die Aufnahmeorte 26 auf dem Führpfad 8. Möglich ist auch, dass der Führpfad 8 als solches zusammen mit den Aufnahmeorten 26 an das hintere Fahrzeug 4 übermittelt wird. Die Lage des Führpfads 8 beziehungsweise der Aufnahmeorte 26 muss hierbei nicht absolut in beispielsweise Geokoordinaten erfolgen, sondern erfolgt relativ zueinander, sodass aus den Daten zunächst nicht bekannt ist, wo sich der Führpfad 8 beziehungsweise die Aufnahmeorte 26 geografisch befinden. Allerdings wird zu jedem Führbild 20 nicht nur der Aufnahmeort 26 sondern auch eine Identifikation mitgegeben.

Wie aus FIG 4 ersichtlich hat das linke hintere Fahrzeug 4 seine Ablage 28 aus einer erfolgreichen Bildkorrelation ermittelt. Das Fahrzeug 4 beziehungsweise dessen Steuereinheit 10 kennt daher die relative Lage des Aufnahmeorts 30 des Folgebilds 22 relativ zum Aufnahmeort 26 des örtlich nächsten Führbilds 20. Die Aufnahmeorte 30 des hinteren Fahrzeugs 4 beziehungsweise der Folgebilder 22 sind in FIG 4 als hohle Kreise dargestellt. Aus den Angaben zum Führpfad 8 und allen Aufnahmeorten 26 darauf kann nun das Fahrzeug 4 seine eigene Lage innerhalb des Führpfads 8 und innerhalb der Aufnahmeorte 26 zweifelsfrei bestimmen. Bei dem in FIG 4 gezeigten Ausführungsbeispiel wurde ermittelt, dass der Aufnahmeort 30 des Folgebilds 22 ein Stück weit links vom Führpfad 8 und etwas hinter dem nächsten Aufnahmeort 26 des korrelierten Führbilds 20 liegt.

Um in diesem Ausführungsbeispiel auf den Führpfad 8 einzuschwenken, korrigiert das hintere Fahrzeug 4 seine Lenkung, in diesem Ausführungsbeispiel nach rechts, sodass dessen Folgepfad 32 auf den Führpfad 8 einschwenkt, wie in FIG 4 dargestellt ist. Die Ablage 28 kann hierbei als Regelgröße für die Lenkkorrektur verwendet werden, sodass die Lenkkorrektur umso stärker ist, je größer die Ablage 28 ist.

Noch besser ist die Verwendung der Winkelablage 34, also dem Winkel zwischen der Ausrichtung 36 des Fahrzeugs 4 und einer Richtung 38 zu einem Punkt auf dem Führpfad 8. Die Entfernung zwischen Fahrzeug 4 und diesem Punkt kann abhängig gemacht werden von der Fahrgeschwindigkeit des Fahrzeugs 4, sodass beispielsweise bei größerer momentaner Fahrgeschwindigkeit die Lenkkorrektur kleiner ausfällt, als bei kleinerer momentaner Fahrgeschwindigkeit.

Bei dem in FIG 4 weiter rechts dargestellten Fahrzeug 4 wurde ebenfalls anhand der Ablage 28 festgestellt, dass es sich zu weit links vom Führpfad 8 aufhält. Im Prinzip ist eine Lenkkorrektur nach rechts notwendig. Da allerdings der Führpfad 8 in voraus liegender Richtung nach links abbiegt, würde eine Lenkkorrektur nach rechts ein späteres sehr scharfes Einschwenken des Folgepfads 32 in den Führpfad 8 bedeuten oder ein starkes Überschwingen des Folgepfads 32 nach rechts über den Führpfad 8. Um dies zu vermeiden, wird bei der Lenkkorrektur ein vor dem Fahrzeug 4 liegender Abschnitt des Führpfads 8 berücksichtigt. Da die Lage des Führpfads 8 relativ zum hinten fahrenden Fahrzeug 4 bekannt ist, kann beispielsweise ein Punkt auf dem Führpfad 8 ausgewählt werden und dieser angesteuert werden, sodass das hintere Fahrzeug 4 an diesem Punkt im Wesentlichen parallel zum Führpfad 8 in diesen einfährt. Durch die Berücksichtigung des vor dem hinteren Fahrzeug 4 liegenden Abschnitts des Führpfads 8 des voraus fahrenden Fahrzeugs 2 kann die Lenkkorrektur beziehungsweise die Lenkbewegung des Fahrzeugs 4 geglättet und ein starkes Überschwingen um den Führpfad 8 vermieden werden.

In FIG 4 sind die Aufnahmeorte 30 der Folgebilder 22 des linken Fahrzeugs 4 durch kleine Kreise dargestellt. Beispielhaft ist dargestellt, dass einer der Aufnahmeorte am Ort des links gezeichneten Fahrzeugs 4 liegt. Der nächste Aufnahmeort 30 liegt weiter vorne, das Fahrzeug 4 hat seine Fahrtrichtung bereits nach rechts korrigiert und fährt auf den Führpfad 8 zu. Der wiederum nächste Aufnahmeort 30 liegt weit rechts vom Führpfad 8. Die Aufnahmeorte 30 wurden jeweils aus der Bilderkorrelation berechnet, also aus der Lage der Schlüsselpunkte 24 in den Bildern 20, 22.

Hierbei kann es vorkommen, dass durch eine fehlerhafte Bildkorrelation ein fehlerhafter Aufnahmeort 30 berechnet wird. Dies ist in FIG 4 anhand des rechts vom Führpfad 8 liegenden Aufnahmeorts 30 dargestellt. Die Steuereinheit 10 müsste hierauf im Prinzip so reagieren, dass sie eine starke Lenkkorrektur nach links durchführt, wo vermeintlich der Führpfad 8 liegt. Eine solche fehlerhafte Lenkkorrektur wird jedoch unterbunden, da der Führpfad 8 des vorausfahrenden Fahrzeugs 2 für die Durchführung der Lenkkorrektur höher priorisiert wird als ein einzelner berechneter Aufnahmeort 30. Denn die Lage des Führpfads 8 relativ zum Fahrzeug 4 ergibt sich durch eine Vielzahl von zuvor durchgeführten Bildkorrelationen, aus denen die Lage des Führpfads 8 relativ zum Fahrzeug 4 berechnet wurde. Die Lage des Führpfads 8 relativ zum Fahrzeug 4 ist daher zuverlässiger als die momentane Aufenthaltsortsberechnung, die aus dem berechneten Aufnahmeort 30 und der Annahme resultiert, dass das Fahrzeug 4 sich nun an diesem Aufnahmeort 30 befindet.

Liegt ein berechneter Aufnahmeort 30 zu weit entfernt von der geschätzten Lage des nächsten Aufnahmeorts, der entsprechend des Ausführungsbeispiels aus FIG 4 sehr nah links von dem Führpfad 8 liegen müsste, so wird der Aufnahmeort 30 niedriger gewichtet als die anderen Aufnahmeorte 30 oder sogar ignoriert. Erst wenn mehrere Aufnahmeorte 30 hintereinander die Lage des Fahrzeugs 4 bestätigen, werden sie zur Ortsbestimmung des Fahrzeugs 4 beziehungsweise zur Bestimmung der Lage des Führpfads 8 relativ zum Fahrzeug 4 herangezogen. Aus FIG 4 ist sichtbar, dass der nach dem Ausreißer liegende nächste Aufnahmeort 30 fast auf dem Führpfad 8 liegt, wie der Führpfad 8 sich für das Fahrzeug 4 darstellt. Der vorherige berechnete Aufnahmeort 30 kann als Fehler identifiziert und verworfen werden.

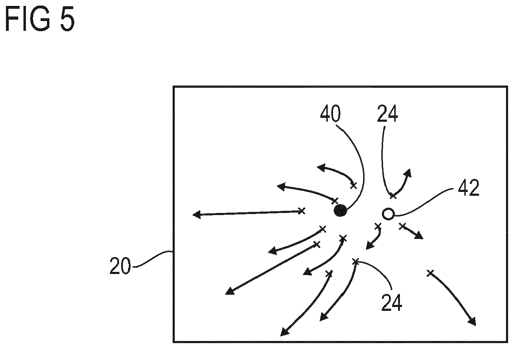

FIG 5 zeigt ein Führbild 20 mit einer Anzahl von Schlüsselpunkten 24. Anhand der Pfeile ausgehend von den Schlüsselpunkten 24 soll dargestellt werden, wie sich die Schlüsselpunkte 24 durch eine Reihe von hintereinander aufgenommenen Führbildern 20 durch den Kamerabildausschnitt bewegen. Außerdem ist die Blickrichtung 40 dargestellt, also der Mittelpunkt des Führbilds 20.

Bei gleichmäßiger Fahrt nach vorne genau in Geradeausrichtung müssten die Schlüsselpunkte 24 sich alle genau von der Blickrichtung der Kamera 16, also der Bildmitte, nach radial außen bewegen. Dies ist jedoch beim gezeigten Ausführungsbeispiel nicht der Fall. Vielmehr wandern die Schlüsselpunkte 24 auf Kurven durch die nacheinander aufgenommenen Führbilder 20, wobei der Fluchtpunkt der Schlüsselpunkte 24 nach rechts wandert, bis er eine neue Blickrichtung 42 erreicht. Aus dieser Bewegung kann errechnet werden, dass sich das vorne fahrende Fahrzeug 2 in einer Rechtskurve befindet und diese im Laufe der aufgenommenen Führbilder 20 durchfährt.

Weiter sei beispielsweise bekannt, dass sich die unteren Schlüsselpunkte 24 auf einer Straße befinden, wobei die Höhe der Kamera 16 zur Straße bekannt ist. Aus der Bewegung dieser Schlüsselpunkte 24 kann von Folgebild zu Folgebild aus der Bewegung der auf der Straße liegenden Schlüsselpunkte 24 auf den Ortsabstand zwischen den einzelnen Führbildern 20 geschlossen werden und damit auf eine Fahrstrecke beziehungsweise Fahrgeschwindigkeit des Fahrzeugs 2. Aus der Fahrgeschwindigkeit und der Fahrtrichtung beziehungsweise Richtungsänderung kann die Steuereinheit 10 des Fahrzeugs 2 den Führpfad 8 berechnen, entlang dessen das Fahrzeug 2 gefahren ist. Der so berechnete Führpfad 8 kann an die hinteren Fahrzeuge 4 übergeben werden.

Um Fehlberechnungen zu vermeiden oder gering zu halten, ist es sinnvoll, die Fahrgeschwindigkeit oder Fahrstrecke zusätzlich zu überprüfen, falls möglich mit Tachometerdaten, die der Steuereinheit 10 üblicherweise bekannt sind oder einer Raddrehfrequenz beziehungsweise Raddrehzahl. Anhand unterschiedlicher Tacho- oder Raddrehdaten eines rechten im Vergleich zu einem linken Rad kann außerdem auf eine Kurvenfahrt geschlossen werden und diese kann mit der aus den Führbildern 20 errechneten Kurvenfahrt verglichen werden. Auf diese Weise kann auch bei einem Traktionsverlust eines Rads eine fehlerhafte Geschwindigkeitsangabe auf dem Tachometer oder eine aus den Radumdrehungen falsch eingeschätzte Kurvenfahrt korrigiert werden. Der Führpfad 8 kann ausreichend genau bestimmt werden, um ein spurtreues Folgen der nachfolgenden Fahrzeuge 4 zu ermöglichen.

### Bezugszeichenliste

- 2: Fahrzeug
- 4: Fahrzeug
- 6: Straße
- 8: Führpfad
- 10: Steuereinheit
- 12: Gegenverkehr
- 14: Bürgersteig
- 16: Kamera
- 18: Haus
- 20: Führbild
- 22: Folgebild
- 24: Schlüsselpunkt
- 26: Aufnahmeort
- 28: Ablage
- 30: Aufnahmeort
- 32: Folgepfad
- 34: Winkelablage
- 36: Ausrichtung
- 38: Richtung
- 40: Blickrichtung
- 42: Blickrichtung
- K: Korrelationsgüte
- N: Nähe

## Patentansprüche

1. Verfahren zum Führen eines Fahrzeugs (4) hinter einem vorausfahrenden Fahrzeug (2), bei dem das vorausfahrende Fahrzeug (2) während seines Fahrens ein Führbild (20) aufnimmt, aus diesem Bildteile beschreibende Deskriptoren ermittelt werden, das hintere Fahrzeug (4) in einer vorgegebenen Nähe (N) des Aufnahmeorts (26) des Führbilds (20) ein Folgebild (22) aufnimmt, aus dem Folgebild (22) ermittelte Deskriptoren mit denen aus dem Führbild (20) verglichen werden und das hintere Fahrzeug (4) aus dem Vergleich seine eigene Position relativ zur Position des vorausfahrenden Fahrzeugs (2) erkennt und seine Fahrt so lenkt, dass es in einer vorbestimmter Weise relativ zum vorausfahrenden Fahrzeug (2) fährt.

2. Verfahren nach Anspruch 1,
**dadurch gekennzeichnet,**
**dass** im Führbild (20) und im Folgebild (22) jeweils mehrere Schlüsselpunkte (24) und zu diesen jeweils zumindest einer der Deskriptoren ermittelt wird, die Deskriptoren des Folgebilds (22) mit denen des Führbilds (20) verglichen werden, bei einer mehr als vorgegebenen Übereinstimmung der Deskriptoren die beiden Bilder (20, 22) einander zugeordnet werden, und die beiden Bilder (20, 22) nur dann zu einer Bestimmung der Fahrzeugposition herangezogen werden, wenn sie einander zugeordnet sind.

3. Verfahren nach Anspruch 1 oder 2,
**dadurch gekennzeichnet,**
**dass** das hintere Fahrzeug (4) seine eigene Position aus der Lage von Schlüsselpunkten (24) zueinander im Folgebild (22) im Vergleich zur Lage der Schlüsselpunkte (24) im Führbild (20) erkennt.

4. Verfahren nach einem der vorhergehenden Ansprüche,
**dadurch gekennzeichnet,**
**dass** das hintere Fahrzeug (4) zueinander korrelierende Führ- und Folgebilder (20, 22) auffindet durch Bildkorrelation eines Folge- oder Führbilds (22, 20) mit einer Reihe von nacheinander aufgenommenen Führ- beziehungsweise Folgebildern (20, 22).

5. Verfahren nach einem der vorhergehenden Ansprüche,
**dadurch gekennzeichnet,**
**dass** dem Führbild (20) Geokoordinaten zugeordnet werden, die dem hinteren Fahrzeug (4) übermittelt werden.

6. Verfahren nach einem der vorhergehenden Ansprüche,
**dadurch gekennzeichnet,**
**dass** aus mehreren Führbildern (20) ein Führpfad (8) bestimmt wird, entlang dessen das vordere Fahrzeug (2) gefahren ist, und der Führpfad (8) an das nachfolgende Fahrzeug (4) übermittelt wird.

7. Verfahren nach Anspruch 6,
**dadurch gekennzeichnet,**
**dass** eine Skalierung des Führpfads (8) anhand der Bewegung mehrerer Schlüsselpunkte (24) durch die Führbilder (20) ermittelt wird.

8. Verfahren nach Anspruch 6 oder 7,
**dadurch gekennzeichnet,**
**dass** die Führbilder (20) jeweils ihrem Aufnahmeort (26) auf dem Führpfad (8) zugeordnet werden.

9. Verfahren nach einem der Ansprüche 6 bis 8,
**dadurch gekennzeichnet,**
**dass** das hintere Fahrzeug (4) anhand der Bildkorrelation seine eigene Position in der Nähe (N) des Führpfads (8) bestimmt.

10. Verfahren nach Anspruch 9,
**dadurch gekennzeichnet,**
**dass** eine dem hinteren Fahrzeug (4) voraus liegende Kurve, die das vordere Fahrzeug (2) gefahren ist, in eine Lenkkorrektur zur Erreichung einer vorbestimmten Bahn einbezogen wird.

11. Verfahren nach einem der Ansprüche 6 bis 10,
**dadurch gekennzeichnet,**
**dass** das hintere Fahrzeug (4) anhand des Führpfads (8) das Ergebnis der Bildkorrelation überprüft.

12. Verfahren nach einem der Ansprüche 6 bis 11,
**dadurch gekennzeichnet,**
**dass** das hintere Fahrzeug (4) seine Lenkung anhand des Führpfads (8) und einer aus der Bildkorrelation abgeleiteten Positionsablage durchführt.

13. Verfahren nach einem der Ansprüche 6 bis 12,
**dadurch gekennzeichnet,**
**dass** das hintere Fahrzeug (4) seine gefahrene Strecke mit einer Strecke des Führpfads (8) vergleicht und zur Auffindung korrelierender Bilder (20, 22) solche Führbilder (20) auswählt, die dem Führpfad (8) der gefahrenen Strecke zugeordnet sind.

14. Verfahren nach einem der vorhergehenden Ansprüche,
**dadurch gekennzeichnet,**
**dass** die Lenkung des hinteren Fahrzeugs (4) geregelt wird, wobei eine Ablage (28) zwischen dem hinteren Fahrzeug (4) und einem Führpfad (8), auf dem das vordere Fahrzeug (2) gefahren ist, als Regelgröße verwendet wird.

15. System aus zwei Fahrzeugen (2, 4) mit jeweils einer Kamera (16) und einer Bildverarbeitungseinheit, die zur Bestimmung von Deskriptoren in den Bildern (20, 22) der Kamera (16) vorbereitet ist, wobei die Bildverarbeitungseinheit zumindest eines der Fahrzeuge (2, 4) dazu vorbereitet ist, Deskriptoren aus dem Bild (20, 22) der Kamera (16) des eigenen Fahrzeugs (2, 4) mit Deskriptoren eines Bilds (20, 22) der Kamera (16) des anderen Fahrzeugs (2, 4) zu vergleichen und daraus die Position eines hinteren Fahrzeugs (4) relativ zur Position des vorausfahrenden Fahrzeugs (2) zu erkennen, Lenkbefehle zu bestimmen und hiermit die Fahrt des hinteren Fahrzeugs (4) so zu lenken, dass es in einer vorbestimmten Weise relativ zum vorderen Fahrzeug (2) fährt.
